Europäisches Patentamt

(19) European Patent Office

Office européen des brevets

(11) Veröffentlichungsnummer: **0 187 937**
**B1**

(12) # EUROPÄISCHE PATENTSCHRIFT

(45) Veröffentlichungstag der Patentschrift:
03.02.88

(51) Int. Cl.⁴: **C 22 C 19/03,** G 02 C 5/00

(21) Anmeldenummer: 85115290.0

(22) Anmeldetag: 02.12.85

(54) Verwendung von Nickellegierungen für Brillengestelle.

(30) Priorität: 10.01.85 DE 3500554

(43) Veröffentlichungstag der Anmeldung:
23.07.86 Patentblatt 86/30

(45) Bekanntmachung des Hinweises auf die Patenterteilung:
03.02.88 Patentblatt 88/5

(84) Benannte Vertragsstaaten:
AT BE CH DE FR GB IT LI LU NL SE

(56) Entgegenhaltungen:
DE-C-3 340 054
GB-A-250 194
GB-A-540 795
US-A-1 439 865
US-A-2 515 186

(73) Patentinhaber: Degussa Aktiengesellschaft,
Weissfrauenstrasse 9, D-6000 Frankfurt am Main
1 (DE)

(72) Erfinder: Berchtold, Lorenz, Dr., Grünaustrasse 3,
D-6450 Hanau 9 (DE)
Erfinder: Jäckel, Gernot, Taunusstrasse 65, D-6467
Hasselroth I (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Nickellegierungen für Brillengestelle und Brillenteile.

Brillengestelle und Brillenteile werden vielfach aus Metallen bzw. Metallegierungen gefertigt. Dabei kommen in der Hauptsache Kupferlegierungen, wie z. B. Zinnbronze (CuSn 6, CuSn 8), Kupfer-Bronze (Cu 82 Ni 2 Sn 5 Zn 11) und Neusilber, oder Nickellegierungen zur Anwendung, die sich zwar durch gute Bearbeitbarkeit auszeichnen, aber eine hohe Korrosionsanfälligkeit besitzen, so daß die aus diesen Werkstoffen gefertigten Brillenteile mit Überzügen aus edleren Metallen bzw. Legierungen versehen werden müssen. Der Gebrauch solcher Verbundwerkstoffe ist jedoch unbefriedigend, da bereits kleinste Poren in den Überzügen den Trägerwerkstoff korrodieren lassen und Brillen als Gebrauchsgegenstände einem abrasiven Verschleiß unterliegen, die nach einiger Zeit den unedlen Trägerwerkstoff freilegt.

In jüngerer Zeit werden Nickel-Chrom- und Nickel-Chrom-Silberlegierungen für Brillenteile (DE-OS- 30 45 334) vorgeschlagen, die sich durch eine gute Korrosionsbeständigkeit auszeichnen, aber eine mangelhafte Bearbeitbarkeit aufweisen. So ist z. B. eine Nickellegierung mit 10-15 % Chrom nur schlecht spanabhebend bearbeitbar, da sie zum Aufschweißen auf das Werkzeug neigt. Die spanabhebende Bearbeitbarkeit läßt sich zwar durch die Zugabe von ca. 1 % Silber zum Nickel-Chrom verbessern, doch wird dies durch einen höheren Materialpreis und eine diffizilere Verarbeitungstechnik erkauft.

Die spanlose Verformung ist auch bei diesen Werkstoffen schwierig, da beide Werkstofftypen (Ni-Cr, Ni-Cr-Ag) eine sehr steile Verfestigungscharakteristik mit steigendem Umformungsgrad aufweisen und so mehrfach weichgeglüht werden müssen. Die Umformung gelingt außerdem nur mit Spezialwalzen und speziellen Ziehdüsen.

Legierungen, die gute Korrosionsbeständigkeit und gute Verarbeitungseigenschaften aufweisen, werden in der DE-PS-33 40 054 genannt. Sie enthalten als Hauptbestandteile Nickel, Kupfer und Zink. Wegen ihres hohen Schmelzpunktes von über 1300°C und des Gehaltes an leicht verdampfendem Zink von 8 - 25 % ist die Herstellung dieser Legierungen schwierig.

Es war daher Aufgabe der vorliegenden Erfindung, Nickellegierungen für Brillengestelle und Brillenteile zu entwickeln, die neben guter Korrosionsbeständigkeit und guter Bearbeitbarkeit auch eine einfache Herstellungsmöglichkeit aufweisen sollten.

Diese Aufgabe wird erfindungsgemäß durch die Verwendung von Nickellegierungen gelöst, die neben Nickel als Rest 5 bis 20 % Kupfer, 2 bis 6 % Aluminium, 0 bis 1 % Beryllium und 0 bis 0,5 % Kohlenstoff enthalten.

Vorzugsweise enthalten die Legierungen 9 bis 14 % Kupfer und 2,5 bis 5 % Aluminium.

Die erfindungsgemäßen Nickel-Kupfer-Aluminium-Legierungen besitzen eine sehr gute Korrosionsbeständigkeit und eine gute Verarbeitbarkeit. Die möglichen Zusätze von Beryllium und Kohlenstoff verbessern die Federeigenschaften der Legierungen und bewirken eine Verschiebung der Rekristallisationstemperatur zu höheren Temperaturen.

Das Fehlen von Zink macht die Herstellung dieser Legierungen unproblematisch.

Die in der DE-PS- 30 40 054 als Zusatz zu Nickel-Kupfer-Zink-Legierungen genannten Al-Gehalte von 0 bis 4 % bewirken eine Verbesserung der Federeigenschaften, sie steigern jedoch nicht die Korrosionsbeständigkeit der Basislegierung Nickel-Kupfer-Zink.

Überraschenderweise wird jedoch für nicht zinkhaltige Legierungen im System Nickel-Kupfer-Aluminium ein Ansteigen der Korrosionsbeständigkeit mit dem Aluminiumgehalt gefunden. Insbesondere bei Aluminium-Gehalten von 2,5 bis 5 % erhält man gute bis sehr gute Korrosionsbeständigkeiten.

In der Tabelle sind die Eigenschaften einiger bekannter Brillenwerkstoffe (Beispiel 4-6) und einiger erfindungsgemäßer Legierungen (1 bis 3) aufgeführt.

**0 187 937**

| Lfd. Nr | Zusammensetzung (Gew.-%) | | | | Verfestigung bei Kaltumformung (Härte Vickers) | | | Herstell- barkeit |
|---|---|---|---|---|---|---|---|---|
| | Ni | Cu | Al | sonst | weich | 40 % Verf. | 80 % Verf. | |
| 1 | 84,4 | 11,3 | 4,3 | - | 115 | 235 | 270 | offen schmelz- bar |
| 2 | 84,4 | 11,2 | 4,2 | 0,1 Be | 125 | 245 | 285 | " |
| 3 | 85 | 11,1 | 3,8 | 0,1 C | 140 | 265 | 310 | " |
| 4 | 78,5 | 10,6 | - | 10,9 Zn | 103 | 210 | 245 | nur mit Hoch- druck- |
| 5 | 78,3 | 10,5 | 0,4 | 10,8 Zn | 113 | 220 | 250 | Schmelzanlage |
| 6 | 78,3 | 10,6 | - | 10,9 Zn 0,2 Be | 118 | 230 | 265 | " |

## Patentansprüche

1. Verwendung von Nickellegierungen aus 5 bis 20 % Kupfer, 2 bis 6 % Aluminium, 0 bis 1 % Beryllium und 0 bis 0,5 % Kohlenstoff, Rest Nickel, als Werkstoff für Brillengestelle und Brillenteile.

2. Verwendung von Nickellegierungen für Brillengestelle und Brillenteile gemäß Anspruch 1, dadurch gekennzeichnet, daß sie 9 bis 14 % Kupfer und 2,5 bis 5 % Aluminium enthalten.

## Claims

1. Use of nickel alloys composed of from 5 to 20 % copper, from 2 to 6 % aluminium, from 0 to 1 % beryllium and from 0 to 0.5 % carbon, remainder nickel as material for spectacle frames and spectacle parts.

2. Use of nickel alloys for spectacle frames and spectacle parts according to Claim 1, characterised in that they contain from 9 to 14 % of copper and from 2.5 to 5 % of aluminium.

## Revendications

1. Utilisation d'alliages de nickel avec 5 à 20 % de cuivre 2 à 6 % d'aluminium 0 à 1 % de beryllium et 0 à 0,5 % de carbone en résidu du nickel, comme matériau pour montures de lunettes ou portions de lunettes.

2. Utilisation d'alliages de nickel pour montures de lunettes et portions de lunettes selon la revendication 7, caractérisée en ce qu'ils renferment de 9 à 14 % de cuivre et de 2,5 à 5 % d'aluminium.

3